# EUROPÄISCHE PATENTSCHRIFT

(11) **EP 1 381 643 B1**
(45) Veröffentlichungstag und Bekanntmachung des Hinweises auf die Patenterteilung: **06.05.2015**
(21) Anmeldenummer: 02737886.8
(22) Anmeldetag: 19.03.2002
(51) Int. Cl.: C08F 2/30, C08F 2/44, C08K 3/00

(54) **FÜLLSTOFFHALTIGE REDISPERSIONSPULVER, VERFAHREN ZU DEREN HERSTELLUNG UND DEREN VERWENDUNG**
REDISPERSION POWDERS THAT CONTAIN FILLERS, METHOD FOR THE PRODUCTION THEREOF, AND THEIR USE
POUDRE DE REDISPERSION CONTENANT UNE SUBSTANCE DE CHARGE, SON PROCEDE DE PREPARATION ET SON UTILISATION

(30) Priorität: 26.03.2001 DE 10114814
(43) Veröffentlichungstag der Anmeldung: 21.01.2004
(73) Patentinhaber: Henkel AG & Co. KGaA, 40589 Düsseldorf (DE)
(72) Erfinder: SCHÖTTMER, Bernhard, D-40789 Monheim (DE); PAVEZ ARANGUIZ, Roberto Antonio, Graneros, VI Region (CL)
(86) Internationale Anmeldenummer: PCT/EP2002/002992
(87) Internationale Veröffentlichungsnummer: WO 2002/085971

(56) Entgegenhaltungen:
- EP-A- 0 038 730
- DE-A- 2 614 261

## Beschreibung

Die Erfindung betrifft füllstoffhaltige Redispersionspulver, die anorganische Füllstoffpartikel und Partikel wenigstens eines synthetischen organischen Polymeren enthalten. Weiterhin betrifft die vorliegende Erfindung ein Verfahren zur Herstellung derartiger Redispersionspulver sowie deren Verwendung in Bindemittelzusammensetzungen.

Polymerpartikel mit einem Durchmesser von etwa 0,01 bis etwa 30 µm spielen eine große Rolle in vielen Bereichen der Kunststofftechnik. Besonders im Bereich der Verklebung von Gegenständen oder der Beschichtung von Oberflächen werden häufig Dispersionsklebstoffe oder Beschichtungsmittel eingesetzt, die Polymerpartikel in dieser Größe enthalten. Beispielhaft für den Anwendungsbereich sind die dekorative Oberflächenbeschichtung in Form von Lackierungen oder sonstigen Überzügen, sowie die Verklebung von zwei Oberflächen mit gleichen oder unterschiedlichen Eigenschaften mit Klebstoffen, wie sie häufig in der Verbindungstechnik zum Tragen kommt.

Während für die obengenannten Anwendungen in der Regel gebrauchsfertige, wäßrige Polymerdispersionen eingesetzt werden, werden in vielen Bereichen der Klebstoff- oder Baustoffindustrie Zubereitungen verlangt, die als rieselfähiger Feststoff vorliegen und erst am Einsatzort durch Zugabe von Wasser in eine wäßrige Dispersion überführt werden. Derartige rieselfähigen Feststoffe enthalten die obengenannten Polymerteilchen daher in fester Form als sogenannte Redispersionspulver.

Häufiges Einsatzgebiet von Redispersionspulvern sind Wand- und Bodenbelagsklebstoffe, die temporäre und permanente Fixierung von Bodenbelägen, Wandfarben in Pulverform, Putze, Zusätze für Gips- und Zementspachtel, Fliesenkleber, Wandmakulaturen, bauchemische Produkte, Modelliermassen und Betonmischungen, denen die Redispersionspulver zu Elastizität, Haftvermögen und Feuchtfestigkeit verhelfen.

Die genannten Polymerpartikel werden in der Regel durch Polymerisation olefinisch ungesättigter Monomerer hergestellt, deren Eigenschaften durch die Polymerisation von Gemischen verschiedener Monomerer, beispielsweise in der Co- oder Terpolymerisation, verändert werden können. Die veränderten Eigenschaften eines einzelnen Polymerpartikels übertragen sich in der Regel als kollektive Eigenschaft auf eine mit Hilfe solcher Polymerpartikel hergestellte Oberflächenbeschichtung oder Verklebung. Kollektive Eigenschaften, die häufig einer anwendungsabhängigen Modifizierung unterworfen werden, sind beispielsweise Härte, Elastizität, Haftvermögen sowie insbesondere im Bereich von Klebstoffanwendungen, Klebestärke, offene Zeit oder Anfangshaftung.

Ebenfalls eine hohe Bedeutung besitzen bestimmte Eigenschaften des zur Herstellung des Überzugs oder der Verklebung eingesetzten Mittels, beispielsweise des Oberflächenbeschichtungsmittels oder des Klebstoffs. In diesem Zusammenhang werden in Abhängigkeit von der gewünschten Anwendung häufig die Viskosität, das Fließverhalten oder der Restmonomergehalt modifiziert.

Oft werden zur Modifizierung der genannten Eigenschaften einer Oberflächenbeschichtung oder einer Verklebung einem Polymerpartikel enthaltenden Oberflächenbeschichtungsmittel oder einem solchen Klebstoff, Füllstoffe zugesetzt, die den Anteil an organischem Material in der Beschichtung reduzieren und damit zu größerer Härte der Beschichtung sowie Schonung von Umwelt und Rohstoffen, aufgrund eines geringeren Gehalts an organischen Polymeren, beitragen.

Während Abmischungen von Polymerpartikeln und Füllstoffen im Bereich der Oberflächenbeschichtung häufig zu stumpfen und rauhen Oberflächen führen, wirken sie sich bei Klebstoffen häufig dergestalt aus, daß die Klebkraft und die Elastizität von Klebeverbindungen stark reduziert wird.

Insbesondere im Bereich der hochwertigen Anwendungen von Verklebungen, beispielsweise bei der Verklebung empfindlicher Wandbeläge, machen sich solche Effekte drastisch bemerkbar.

Der Einsatz von sprühgetrocknetem Redispersionspulver, z. B. auf Basis von Polyvinylacetat in Tapetenkleistern und anderen Wandbelagsklebstoffen, an die hinsichtlich Klebkraft und Feuchtfestigkeit besondere Anforderungen gestellt werden, ist seit langem bekannt. Solche Klebstoffe setzen sich typischerweise aus Celluloseethern (Methylcellulose, Methylhydroxyethylcellulose, MHPC oder Carboxymethylcellulose) oder Stärkeether, oder Gemischen aus zwei oder mehr der genannten Verbindungen, vorzugsweise Carboxymethylstärke, Hydroxypropylstärke oder Quellstärke zusammen. Sie enthalten je nach Einsatzzweck und Qualitätsspektrum zumeist bis zu 40 Gew.-%, in Einzelfällen sogar bis zu ca. 90 Gew.-% Homo- bzw. Copolymer-Redispersionspulver beispielsweise auf Basis von Polyvinylacetat, Vinylacetat-Maleinatmischpolymeren; Ethylen-Vinylacetatmischpolymeren, Acrylat und/oder Methacrylat Homo- und/oder Copolymeren - im folgenden als (Meth)acrylatpolymere bezeichnet - wobei Styrolacrylatpolymere ein Beispiel für Copolymerisate der zuletzt angegebenen Art sind.

Markttypische sogenannte Spezialkleister enthalten beispielsweise etwa 40 bis 60 Gew.-% nichtionogene Celluloseether, etwa 25 bis 50 Gew.-% Polyvinylacetat-Redispersionspulver, sonstige Hilfsstoffe, Netz- und Konservierungsmittel. Andere Spezialkleister enthalten Carboxymethylcellulose bzw. Stärkeether. Tapetenkleister der vorstehend genannten Art sind beispielsweise aus der EP 0 103 772 bekannt.

Redispersionspulver werden bekanntlich nach der bisherigen Praxis durch Sprühtrocknung von Polymerdispersionen in Sprühtürmen her gestellt. Hierbei wird die Polymerdispersion durch geeignete Sprüh- bzw. Dispergiereinrichtungen feinteilig zerstäubt und im erhitzten Gas- bzw. Luftstrom getrocknet, durch geeignete technische Vorrichtungen aus dem Sprühturm geführt und in Trockensilos gelagert. Dem Fachmann bekannt, kann die Korngrößenverteilung und die Redispergierfähigkeit des resultierenden Produktes in relativ weiten Grenzen gesteuert werden. Hierbei werden sowohl technologische Maßnahmen eingesetzt, beispielsweise durch Wahl des Zerstäubungsgrades, der Trocknungsbedingungen und der Verweilzeit, es wird aber auch durch Einsatz von Hilfsstoffen beispielsweise Netzmitteln oder Zusatz von Polyvinylalkohol Einfluß auf die Produkteigenschaften genommen.

Für den Einsatzzweck in Wandbelagsklebstoffen wäre es beispielsweise vorteilhaft, die Kornverteilung des Redispersionspulvers möglichst eng und in einer mittleren Korngröße von ca. 100 bis 500 µm, vorzugsweise etwa 150 bis 200- µm zu wählen, um Staubentwicklung sicher auszuschließen und gleichzeitig die technisch aufwendige Mahlung der übrigen Formulierungskomponenten, insbesondere von Celluloseethern auf einem wirtschaftlich vertretbaren Niveau zu halten.

Diese an sich wünschenswerte Korngröße von Redispersionspulvern stößt jedoch auf die Schwierigkeit, daß die Re-Emulgierung bei Kontakt mit Wasser entweder sehr lange, dem Verarbeiter nicht zumutbare Quellzeiten erforderlich machen würde und im Einzelfalle sogar überhaupt nicht oder nur unvollständig vonstatten geht. Hierdurch entstehen beim Auftrag sehr rauhe Klebstoffilme und im Extremfall Durchmarkierungen durch optisch empfindliche Wandbeläge, z. B. bei Metalltapeten. Relativ grobteilige, sicher reemulgierende Polymerpulver erfordern daher bisher den Zusatz höherer Mengen an Polyvinylalkohol von geeignetem Molekulargewicht und Verseifungsgrad. Nachteilig wird hierdurch jedoch die permanente und reversible Emulgierung ebenfalls erhöht und damit die an sich gewünschte hohe Feuchtfestigkeit limitiert.

Um dem bei Redispersionspulvern häufig auftretenden Problem der mangelhaften Benetzbarkeit beim Eintrag in Wasser entgegenzuwirken wurden in der Vergangenheit Versuche unternommen, die Oberflächenstruktur der Polymerteilchen des Redispersionspulvers während des Sprühtrocknungsvorgangs durch die Zugabe von Füllstoffen zu modifizieren.

So beschreibt beispielsweise die DE 197 32 333 Redispersionspulver für Klebstoffe, die sich durch ein sehr gutes "Instant"-Verhalten auszeichnen. Zur Herstellung derartiger Pulver werden Polymerdispersionen zusammen mit einem hydrophilen Antiblockmittel versprüht, wobei das hydrophile Antiblockmittel eine Anteil ein hydrophober Kieselsäure enthält. Nachteilig wirkt sich bei dem beschriebenen Verfahren zum einen die Tatsache aus, daß zur Herstellung der Redispersionspulver ein komplexer Sprühturmaufbau erforderlich ist. Weiterhin neigen die Redispersionspulver aufgrund der oberflächlich anhaftenden Antiblockmittel zur Feinstaubbildung.

Die US-A 4,481,328 betrifft eine pulverförmige Polymerzusammensetzung die durch Sprühtrocknung einer wäßrigen Dispersion eines Vinylesterpolymeren in Gegenwart von Kieselsäuren erhältlich ist. Die Sprühtrocknung erfolgt mit Hilfe einer zweistufigen Düse, wobei durch eine erste Düse die Polymerdispersion und durch eine zweite Düse die Kieselsäure in den Trockenturm eingebracht wird. Problematisch wirkt sich bei diesem Verfahren ebenfalls der erhöhte Aufwand in Betrieb des Sprühturms sowie die Neigung der Pulver zur Staubbildung aus.

Die WO 00/40629 betrifft eine Polymerdispersion die Wasser, Partikel mindestens eines organischen oder mindestens eines anorganischen Füllstoffs oder deren Gemisch und Partikel mindestens eines synthetischen organischen Polymeren, das in Gegenwart mindestens einer Sorte von Füllstoffpartikeln polymerisiert wurde, enthält. Redispersionspulver werden in der Druckschrift nicht beschrieben.

Es war demnach eine Aufgabe der vorliegenden Erfindung, den oben genannten Nachteilen der aus dem Stand der Technik bekannten Redispersionspulvern abzuhelfen. Insbesondere war es eine Aufgabe der Erfindung, ein Redispersionspulver zur Verfügung zu stellen, welches die Vorteile der aus dem Stand der Technik bekannten Redispersionspulver unter Vermeidung der aus dem Stand der Technik bekannten Nachteile aufweist.

Eine besondere Aufgabe der vorliegenden Erfindung bestand demnach darin, Redispersionspulver zur Verfügung zu stellen, die im trockenen Zustand bei der Lagerung, beispielsweise bei der Lagerung in Big Bags nicht verklumpen. Weiterhin lag der vorliegenden Erfindung die Aufgabe zugrunde Redispersionspulver zur Verfügung zustellen, die beim Einrühren in Wasser schnell benetzen und eine klumpenfreie Dispersion bilden.

Weiterhin war es eine Aufgabe der vorliegenden Erfindung eine Redispersionspulver enthaltende Zusammensetzungen zur Verfügung zu stellen, die als Klebstoff mit hoher Klebkraft, insbesondere für Wand- Decken- oder Bodenbeläge, einsetzbar sind.

Eine weitere Aufgabe der Erfindung bestand darin, Redispersionspulver enthaltende Baustoffe zur Verfügung zu stellen, die eine besonders gute Redispergierbarkeit unter Beibehaltung der Wasserfestigkeit und der flexibilisierenden Eigenschaften aufweisen und Beibehaltung der Wasserfestigkeit und der flexibilisierenden Eigenschaften aufweisen und schnell und unter geringem Rühraufwand zu flexiblen zementären Klebstoffen und Ausgleichsmassen führen und in denen das Redispersionspulver homogen verteilt ist.

Eine weitere Aufgabe der Erfindung bestand darin, Redispersionspulver enthaltende Baustoffe zur Verfügung zu stellen, die sich durch eine besonders gute Redispergierbarkeit auszeichnen und trotzdem eine gute Wasserfestigkeit beziehungsweise schlechte Reemulgierbarkeit zeigen. Dies ist nach dem Stand der Technik bisher unter anderem durch Einsatz größerer Mengen an Netzmitteln möglich, wobei Klebstoffilme, die solche redispergierten Polymeren enthalten, sehr wasserempfindlich sind.

Eine weitere Aufgabe der Erfindung bestand darin, ein Verfahren zur Herstellung solcher Redispersionspulver zur Verfügung zu stellen.

Gelöst werden die oben genannten Aufgaben durch Redispersionspulver, Zusammensetzungen und Verfahren zu deren Herstellung, wie sie im weiteren Text beschrieben sind.

Gegenstand der Erfindung ist ein Redispersionspulver gemäß Anspruch 1.

Unter dem Begriff "Polymerpartikel" werden im Rahmen der vorliegenden Erfindung dispergierte Partikel eines im wesentlichen wasserunlöslichen synthetischen organischen Polymeren verstanden.

Unter den Begriffen "Teilchengröße" oder "Partikelgröße", die im Rahmen des vorliegenden Textes synonym benutzt werden, wird im Rahmen der vorliegenden Erfindung der üblicherweise als "d50" bezeichnete Wert verstanden, d. h., der Wert bei dem etwa 50 % der Partikel einen kleineren Durchmesser und etwa 50 % der Partikel einen größeren Durchmesser aufweisen. Zur Bestimmung dieses Werts eignen sich grundsätzlich alle Partikelmeßverfahren, beispielsweise Meßverfahren, die auf dem Prinzip der Teilchengrößen beziehen sich auf Messungen mit dem Gerät MASTERSIZER X, von der Firma Malvern Instruments, Herrsching, Deutschland, (Version 1.2b). Die Funktionsweise dieses Apparates beruht auf der Beugung eines Lichtstrahles, indem die Partikelgröße mit dem Beugungswinkel in Zusammenhang gebracht wird.

Weitere Verfahren zur Bestimmung von Teilchengrößen sind beispielsweise die Granulometrie, bei der in einem geeigneten Dispersionsmittel eine gleichmäßige Aufschlämmung einer kleinen Menge des zu untersuchenden Pulvers hergestellt wird und diese dann der Sedimentation ausgesetzt wird. Aus dem nach dem Stokes-Gesetz gegebenen Zusammenhang zwischen Größe und Dichte der als kugelförmig angenommenen Teilchen und ihrer Sinkgeschwindigkeit kann über den zeitlichen Verlauf der Sedimentation auf die prozentuale Verteilung der Korngrößen geschlossen werden. Weitere Methoden zur Bestimmung der Teilchengröße sind die Mikroskopie, Elektronenmikroskopie, Siebanalyse, Sedimentationsanalyse, Bestimmung der Dichte der Oberfläche und dergleichen.

Als Füllstoffpartikel eignen sich im Rahmen der vorliegenden Erfindung alle anorganischen Partikel, die eine Partikelgröße (gemäß der oben genannten Definition) von etwa 0,033 bis etwa 10 µm, beispielsweise etwa 0,05 bis etwa 5 µm, oder 0,1 bis etwa 3 µm, oder etwa 0,5 bis etwa 1,0 µm aufweisen. Zur Klassifizierung der Partikelgröße wird im Rahmen der vorliegenden Erfindung auf die Größe der Primärpartikel abgestellt.

Unter einem "Primärpartikel" wird im Rahmen der vorliegenden Erfindung ein Partikel verstanden, der aufgrund von primären ionischen oder kovalenten Kräften, beispielsweise in Form eines Kristallgitters, zusammengehalten wird. Im Unterschied zu den Primärpartikeln werden als "Sekundärpartikel" Agglomerate von zwei oder mehr Primärpartikeln verstanden, die aufgrund von schwachen ionischen oder anderen auf Polarität beruhenden Kräften an den Außenflächen oder Korngrenzen der Primärpartikel aneinander haften und unter geringem Energieaufwand, beispielsweise durch eine einfache mechanische Dispersion und/oder durch Zugabe eines Dispergiermittels, das die Aufspaltung der Partikel durch Beseitigung oder Verminderung der zwischen den Primärpartikeln bestehenden schwachen Bindungskräfte bewirkt.

Als Füllstoffpartikel eignen sich im Rahmen der vorliegenden Erfindung anorganische Stoffe, die gegenüber dem mindestens einen organischen Polymeren sowie während des Herstellungsprozesses der füllstoffhaltigen Polymerdispersion unter den dort herrschenden Reaktionsbedingungen inert sind. Geeignete anorganische Materialien sind Kreide (CaCO3), Gips (CaSO4) als Anhydrit, Halbhydrat oder Dihydrat, Quarzmehl, Kieselgel, Titandioxid, Talk, Schichtsilikat, Bariumsulfat oder Barit.

Die genannten anorganischen Materialien können im Rahmen der vorliegenden Erfindung einzeln, d. h. als einzige Art von Füllstoffpartikeln eingesetzt werden. Es ist jedoch ebensogut möglich, ein Gemisch aus zwei oder mehr der genannten Füllstoffpartikel einzusetzen.

Im Rahmen einer bevorzugten Ausführungsform der Erfindung enthält ein erfindungsgemäßes Redispersionspulver nur eine einzige Art von Füllstoffpartikeln.

Die im Rahmen der vorliegenden Erfindung einsetzbaren Füllstoffpartikel können glatte, rauhe oder poröse Oberflächen aufweisen. Im Rahmen einer bevorzugten Ausführungsform weisen Füllstoffpartikel eine rauhe oder eine poröse Oberfläche auf.

Im Rahmen einer bevorzugten Ausführungsform der Erfindung sind in der erfindungsgemäßen füllstoffhaltigen Polymerdispersion Partikel von Kreide (CaCO₃), Gips (CaSO₄) als Anhydrit, Halbhydrat oder Dihydrat, Quarzmehl, Kieselgel, Titandioxid, Quarzmehl, Talk, oder ein Schichtsilikat als Füllstoff enthalten.

In einer weiteren bevorzugten Ausführungsform der Erfindung enthält ein erfindungsgemäßes Redispersionspulver als Füllstoffpartikel Kreide (CaCO₃) oder Gips (CaSO₄) oder ein Gemisch von Füllstoffpartikeln enthaltend Kreide und Gips. In einer besonders bevorzugten Ausführungsform sind als Füllstoffpartikel Kreidepartikel enthalten.

Ein erfindungsgemäßes Redispersionspulver enthält Polymerpartikel bestehend aus einem organischen Polymeren oder einem Gemisch aus zwei oder mehr organischen Polymeren.

Als organische Polymere eignen sich alle organischen Polymeren, die durch radikalische Polymerisation olefinisch ungesättigter und radikalisch polymerisierbarer Monomere erhältlich sind.

Zur Herstellung der Polymerpartikel eignen sich insbesondere olefinisch ungesättigte Monomere, die einer Emulsionspolymerisation zugänglich sind. Geeignete Polymere sind beispielsweise Vinylester-Polymere, deren monomerer Grundbaustein ein Vinylester einer linearen oder verzweigten Carbonsäure mit etwa 2 bis etwa 10 C-Atomen darstellt.

Die Vinylester-Polymeren werden nicht nur als Homopolymere oder Copolymere von Vinylester-Monomeren eingesetzt, in einer weiteren bevorzugten Ausführungsform der Erfindung wird als organisches Polymeres ein Copolymeres von Vinylacetat und Ethylen (EVA-Copolymeres) eingesetzt.

Weitere geeignete organische Polymere entstammen der Gruppe der Styrol-Butadien-Kautschuke (SBR). Solche Kautschuke werden durch Copolymerisation von Styrol und Butadien hergestellt und enthalten die beiden Monomere in der Regel in einem Gewichtsverhältnis von etwa 23,5 zu 76,5 oder etwa 40 zu 60. Die SBR werden üblicherweise durch Emulsionspolymerisation in Wasser hergestellt.

Eine weitere geeignete Gruppe von Polymeren sind die Polyvinylacetate (PVAC). Die Polyvinylacetate stellen thermoplastische Polymere des Vinylacetats dar. Die Polymerisation erfolgt in der Regel durch Suspensions- oder Emulsionspolymerisation.

Eine weitere geeignete Gruppe von Polymeren stellen die Polyethylenhomo- und Copolymere dar. Eine radikalische Polymerisation von Ethylen wird beispielsweise im Rahmen der Hochdruckpolymerisation zu LDPE bei Drücken von etwa 1.400 bis 3.500 bar unter Temperaturen von 150 bis 350 °C durchgeführt. Die Reaktion wird dabei durch Sauerstoff oder Peroxide gestartet. Als Comonomere eignen sich lineare oder verzweigte α,β-ungesättigte Olefine.

Eine weitere Gruppe von geeigneten Polymeren stellen die Polyacrylsäureester oder die Polymethacrylsäureester oder die Copolymere aus Acrylsäureestern und Methacrylsäureestern davon. Gegebenenfalls können die genannten Polymere einen Gehalt an freier Säure aufweisen, der bis 20-25 ml 0,1 n KOH-Lösung entspricht.

Ein weiteres geeignetes Polymeres ist das Polyvinylidenchlorid. Das Polymere wird vorzugsweise durch Emulsionspolymerisation von 1,1-Dichlorethylen erhalten. Besonders geeignet sind Copolymere von 1,1-Dichlorethylen mit Acrylaten, Methacrylaten, Vinylchlorid oder Acrylnitril.

Ein weiteres geeignetes Polymeres ist das Polyvinylidenfluorid. Das Polymere läßt sich durch Polymerisation von Vinylidenfluorid erhalten und kann beispielsweise durch Copolymerisation mit geeigneten Monomeren wie Ethylen, Acrylnitril, Acrylatestern, Methacrylatestern und dergleichen in bezug auf chemische und mechanische Eigenschaften angepaßt werden.

Ebenfalls geeignet sind die Polyvinylchloride, wie sie im Rahmen der Suspensionspolymerisation (S-PVC) der Mikro-Suspensionspolymerisation oder der Emulsionspolymerisation (E-PVC) erhältlich sind.

Die genannten Polymeren können im Rahmen der vorliegenden Erfindung in den erfindungsgemäßen Redispersionspulvern sowohl einzeln als auch als Gemisch aus zwei oder mehr davon vorliegen.

In einer weiteren bevorzugten Ausführungsform der Erfindung enthält ein erfindungsgemäßes Redispersionspulver als Polymerpartikel Polyvinylacetat oder Polyacrylat, insbesondere Polybutylacrylat oder ein Gemisch aus Polyvinylacetat und Polyacrylat.

Je nach gewünschten Eigenschaften der Polymerpartikel und der Art der Herstellung kann der Anteil an Füllstoff am gesamten Redispersionspulver etwa 3 bis etwa 55 Gew.-% betragen. In einer bevorzugten Ausführungsform der Erfindung beträgt der Anteil etwa 5 bis etwa 50 Gew.-%, beispielsweise etwa 10 bis etwa 35 Gew.-%. In einer weiteren bevorzugten Ausführungsform kann der Gehalt an Füllstoffpartikeln bei etwa 15, 20, 25 oder 30 Gew.-% oder einem zwischen diesen Zahlen liegendem Wert liegen.

In einer weiteren bevorzugten Ausführungsform der Erfindung enthält ein erfindungsgemäßes Redispersionspulver noch mindestens ein wasserlösliches organisches Polymeres mit einem Molekulargewicht von mehr als etwa 600 und einem HLB-Wert von mindestens 15, beispielsweise mehr als etwa 16 oder mehr als etwa 17 oder mehr als etwa 18.

Ein geeignetes organisches Polymer ist beispielsweise Polyvinylalkohol, der bis zu etwa 99 % hydrolysiert sein kann, wobei die Essigsäuregruppen der Kette durch OH-Gruppen ersetzt sind, die vorzugsweise statistisch über die gesamte Polymerkette verteilt sind.

Der Polyvinylalkohol weist vorzugsweise einen Polymerisationsgrad von mehr als 100, insbesondere von mehr als etwa 2 000 auf. Besonders gute Ergebnisse lassen sich beispielsweise mit Polyvinylalkohol mit einem Polymerisationsgrad von etwa 1 000 bis etwa 2 000 erzielen.

Der Polyvinylalkohol weist vorzugsweise einen HLB-Wert von mindestens etwa 19 oder mindestens etwa 20 auf, beispielsweise etwa 21 bis etwa 26, z.B. etwa 22 bis etwa 24.

Weitere im Rahmen der vorliegenden Erfindung geeignete wasserlösliche organische Polymere bestehen beispielsweise aus den Celluloseethern, Carboxymethylcellulosen, Hydroxyethylcellulosen, Casein, Natrium- oder Kaliumalginaten, Polyurethanen usw.

In einer bevorzugten Ausführungsform der Erfindung beträgt das Verhältnis der mittleren spezifischen Oberfläche von organischem Polymeren zu Füllstoffpartikeln etwa 2 : 1 bis etwa 8:1. Die den anorganischen Füllstoffen entsprechende spezifische Gesamtoberfläche beträgt, bezogen auf die organischen wasserlöslichen Polymeren, bei den erfindungsgemäßen Redispersionspulvern etwa 5 % bis etwa 35 % der Gesamtoberfläche des Redispersionspulvers.

In einer bevorzugten Ausführungsform der Erfindung erhöhen die anorganischen Füllstoffe die mittlere spezifische Gesamtoberfläche des Redispersionspulvers.

In einer weiteren bevorzugten Ausführungsform der Erfindung enthält ein erfindungsgemäßes Redispersionspulver mindestens ein ionisches Tensid mit einem HLB-Wert von 1 bis 10. In einer bevorzugten Ausführungsform der Erfindung weist das ionische Tensid ein Molekulargewicht von weniger als etwa 600 auf.

Es können hierbei anionische, kationische oder ampholytische Tenside, oder Gemische aus zwei oder mehr davon, enthalten sein. Beispiele für geeignete anionische Tenside sind Alkylsulfate, insbesondere solche mit einer Kettenlänge von etwa 8 bis etwa 18 C-Atomen, Alkyl- und Alkarylethersulfate mit etwa 8 bis etwa 18 C-Atomen im hydrophoben Rest und 1 bis etwa 10 Ethylenoxid (EO) oder Propylenoxid (PO) Einheiten, oder deren Gemisch, im hydrophilen Teil des Moleküls, Sulfonate, insbesondere Alkylsulfonate, mit etwa 8 bis etwa 18 C-Atomen, Alkylarylsulfonate mit etwa 8 bis etwa 18 C-Atomen, Tauride, Ester und Halbester der Sulfobernsteinsäure mit einwertigen Alkoholen oder Alkylphenolen mit 4 bis etwa 15 C-Atomen, die gegebenenfalls mit 1 bis etwa 20 EO-Einheiten ethoxyliert sein können, Alkali- und Ammoniumsalze von Carbonsäuren, beispielsweise von Fettsäuren oder Harzsäuren mit etwa 8 bis etwa 32 C-Atomen oder deren Gemischen, Phosphorsäurepartialester und deren Alkali- und Ammoniumsalze.

In einer bevorzugten Ausführungsform der Erfindung werden als anionische Tenside Alkyl- und Alkarylphosphate mit etwa 8 bis etwa 22 C-Atomen im organischen Rest, Alkylether- oder Alkaryletherphosphate mit etwa 8 bis etwa 22 C-Atomen im Alkyl- bzw. Alkarylrest und 1 bis etwa 10 EO-Einheiten eingesetzt.

Beispiele für kationische Tenside sind Salze von primären, sekundären oder tertiären Fettaminen mit etwa 8 bis etwa 24 C-Atomen mit Essigsäure, Schwefelsäure, Salzsäure oder Phosphorsäuren, quaternäre Alkyl- und Alkylbenzolammoniumsalze, insbesondere solche, deren Alkylgruppen etwa 6 bis etwa 24 C-Atome aufweisen, insbesondere die Halogenide, Sulfate, Phosphate oder Acetate, oder Gemische aus zwei oder mehr davon, Alkylpyridinium-, Alkylimidazolinium- oder Alkyloxazolidiniumsalze, insbesondere solche, deren Alkylkette bis zu etwa 18 C-Atome aufweist, beispielsweise die Halogenide, Sulfate, Phosphate oder Acetate, oder Gemische aus zwei oder mehr davon.

Beispiele für ampholytische Tenside sind langkettig substituierte Aminosäuren wie N-Alkyl-di(aminoethyl)glycin oder N-Alkyl-2-aminopropionsäuresalze, Betaine, wie N-(3-acylamidopropyl)-N,N-dimethylammoniumsalze mit einem C₈₋₁₈-Acylrest oder Alkylimidazoliumbetaine.

In einer bevorzugten Ausführungsform der vorliegenden Erfindung werden die folgenden anionischen Tenside eingesetzt: die Alkalisalze, insbesondere das Na-Salz der C_{12/14}-Fettalkoholethersulfate, Alkylphenolethersulfate, insbesondere deren Alkali- oder NH₄-Salze, Na-n-Dodecylsulfat, Di-K-Ölsäuresulfonat (C₁₈), Na-n-alkyl-(C₁₀C₁₃)-benzolsulfonat, Na-2-Ethylhexylsulfat, NH₄-Laurylsulfat (C_{8/14}), Na-Laurylsulfat (C_{12/14}), Na-Laurylsulfat (C_{12/16}), Na-Laurylsulfat (C_{12/18}), Na-Cetylstearylsulfat (C_{16/18}), Na-Oleylcetylsulfat (C_{16/18}), Sulfobernsteinsäuremonoester-di-Na-Salz, Fettalkoholsulfosuccinat-di-Na-Salz, Dialkylsulfosuccinat-Na-Salz oder Di-Na-Sulfosuccinamat oder Gemische aus zwei oder mehr davon.

Wenn ein erfindungsgemäßes Redispersionspulver ionische Tenside enthält, so sind sie in einer bevorzugten Ausführungsform der Erfindung in einer Menge von bis zu etwa 5 Gew.-% oder weniger, beispielsweise bis zu etwa 2 Gew.-% oder etwa 1 Gew.-%, oder weniger, bezogen auf das gesamte Redispersionspulver, enthalten. Gegebenenfalls können auch geringere Mengen an ionischem Tensid enthalten sein, beispielsweise bis zu etwa 0,5 Gew.-% oder darunter, beispielsweise etwa 0,2 Gew.-%, 0,1 Gew.-% oder 0,05 Gew.-%. In einer weiteren bevorzugten Ausführungsform beträgt das Verhältnis von ionischem Tensid zu organischem wasserlöslichem Polymerem etwa 0,1 % bis etwa 3,0 %.

In einer weiteren bevorzugten Ausführungsform enthält ein erfindungsgemäßes Redispersionspulver mindestens ein nichtionisches Tensid mit einem HLB-Wert von 13 bis 20. In einer bevorzugten Ausführungsform der Erfindung weist das nichtionische Tensid ein Molekulargewicht von weniger als etwa 600 auf.

Beispiele für nichtionische Tenside sind Alkylpolyglykolether, vorzugsweise solche mit etwa 8 bis etwa 20 EO-Einheiten und Alkylresten mit etwa 8 bis etwa 20 C-Atomen, Alkylarylpolyglykolether, vorzugsweise solche mit etwa 8 bis etwa 40 EO-Einheiten und etwa 8 bis etwa 20 C-Atomen in den Alkyl- oder Arylresten, Ethylenoxid/Propylenoxid (EO/PO)-Blockcopolymere, vorzugsweise solche mit etwa 8 bis etwa 40 EO- bzw. PO-Einheiten, Additionsprodukte von Alkylaminen mit Alkylresten von etwa 8 bis etwa 22 C-Atomen mit Ethylenoxid oder Propylenoxid, Fett- und Harzsäuren mit etwa 6 bis etwa 32 C-Atomen, Alkylpolyglykoside mit linearen oder verzweigten, gesättigten oder ungesättigten Alkylresten mit im Mittel etwa 8 bis etwa 24 C-Atomen und einem Oligoglykosidrest mit etwa 1 bis etwa 10 Hexose- oder Pentoseeinheiten im Mittel oder Gemische aus zwei oder mehr davon, Naturstoffe und deren Derivate wie Lecithin, Lanolin oder Sarkosin, polare Gruppen enthaltende lineare Organo(poly)siloxane, insbesondere solche mit Alkoxygruppen mit bis zu etwa 10 C-Atomen und bis zu etwa 20 EO- oder PO-Gruppen.

In einer weiteren bevorzugten Ausführungsform der Erfindung enthält ein erfindungsgemäßes Redispersionspulver als nichtionisches Tensid beispielsweise Nonylphenolethoxylate, Octylphenolethoxylate, C_{12/14}-Fettalkoholethoxylate, Oleylcetylethoxylate, C_{16/18}-Fettalkoholethoxylate, Cetylstearylethoxylate, ethoxylierte Triglyceride, Sorbitanmonolaurat, Sorbitanmonooleat, Sorbitan-20EO-monooleat, Sorbitan-20EO-monostearat oder ein Gemisch aus zwei oder mehr davon.

Wenn das erfindungsgemäße Redispersionspulver nichtionische Tenside enthält, so sind diese in einer bevorzugten Ausführungsform der Erfindung in einer Menge von bis zu etwa 5 Gew.-% oder weniger, beispielsweise bis zu etwa 2 Gew.-% oder etwa 1 Gew.-%, oder weniger, bezogen auf das gesamte Redispersionspulver, enthalten. Gegebenenfalls können auch geringere Mengen an nichtionischem Tensid enthalten sein, beispielsweise bis zu etwa 0,5 Gew.-% oder darunter, beispielsweise etwa 0,2 Gew.-%, 0,1 Gew.-% oder 0,05 Gew.-%. Das Verhältnis von nichtionischem Tensid zu anionischem Tensid beträgt in einer bevorzugten Ausführungsform der Erfindung etwa 5 : 1 bis 1 : 5.

In einer weiteren bevorzugten Ausführungsform der Erfindung enthält ein erfindungsgemäßes Redispersionspulver bis zu etwa 45 Gew.-%, bezogen auf das gesamte Redispersionspulver, an Zusatzstoffen. Zu den Zusatzstoffen zählen beispielsweise Stabilisatoren, Entschäumer, Antioxidantien, Photostabilisatoren, Pigmentverteiler, Pigmente, pH-Regler, Weichmacher und dergleichen.

Als Weichmacher geeignet sind beispielsweise Ester wie Abietinsäureester, Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester, sowie Gemische aus zwei oder mehr davon. Besonders geeignet sind die asymmetrischen Ester der difunktionellen, aliphatischen Dicarbonsäuren, beispielsweise das Veresterungsprodukt von Adipinsäuremonooctylester mit 2-Ethylhexanol (Edenol DOA, Fa. Henkel, Düsseldorf).

Ebenfalls als Weichmacher geeignet sind die reinen oder gemischten Ether monofunk-tioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Henkel, Düsseldorf).

In einer weiteren bevorzugten Ausführungsform werden als Weichmacher endgruppenverschlossene Polyethylenglykole eingesetzt. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Ein erfindungsgemäßes Redispersionspulver kann, wenn eine Verwendung als Klebstoff vorgesehen ist, bis zu etwa 5 Gew.-% an üblichen Tackifiern enthalten. Als Tackifier geeignet sind beispielsweise Harze, Terpen-Oligomere, Cumaron-/Inden-Harze, aliphatische, petrochemische Harze und modifizierte Phenolharze.

Ein erfindungsgemäßes Redispersionspulver kann bis zu etwa 3 Gew.-%, vorzugsweise bis zu etwa 2 Gew.-% an UV-Stabilisatoren enthalten. Als UV-Stabilisatoren besonders geeignet sind die sogenannten Hindered Amine Light Stabilisators (HALS).

In einer weiteren bevorzugten Ausführungsform der Erfindung weist ein erfindungsgemäßes Redispersionspulver etwa
- 10 bis 90 Gew.-% eines organischen Polymeren in Form von Polymerpartikeln,
- 5 bis etwa 70 Gew.-% Füllstoffpartikel,
- 0,1 bis etwa 2 Gew.-% eines nichtionischen Tensids mit einem HLB-Wert von 13 bis 20,
- 0,01 bis etwa 1 Gew.-% eines ionischen Tensids mit einem HLB-Wert von 1 bis 10,
- 0,05 bis etwa 20 Gew.-% eines wasserlöslichen organischen Polymeren mit einem Molekulargewicht von mehr als 600 und einem HLB-Wert von mehr als 15, und
- 0 bis etwa 30 Gew.-% weitere Zusatzstoffe
auf.

Basis für die Herstellung der erfindungsgemäßen Redispersionspulver ist eine Polymerdispersion. Zur Herstellung der erfindungsgemäßen Redispersionspulver geeignete Polymerdispersionen können grundsätzlich auf beliebige Weise, beispielsweise durch Emulsionspolymerisation oder Suspensionspolymerisation, hergestellt werden. Die zur Herstellung der erfindungsgemäßen Redispersionspulver geeigneten Polymerdispersionen weisen im Gegensatz zu üblicherweise für die Herstellung von Redispersionspulvern eingesetzten Polymerdispersionen die Besonderheit auf, daß ihre Herstellung in Gegenwart von Füllstoffen erfolgt. Die zur Herstellung der Redispersionspulver erforderliche Sprühtrocknung wird daher mit einer füllstoffhaltigen Polymerdispersion durchgeführt.

In einer bevorzugten Ausführungsform der vorliegenden Erfindung wird diese füllstoffhaltige Polymerdispersion durch Emulsionspolymerisation hergestellt. Unter "Emulsionspolymerisation" wird im Rahmen der vorliegenden Erfindung ein Verfahren zur Polymerisation verstanden, bei dem in Wasser unlösliche oder schlecht lösliche Monomere mit Hilfe von Emulgatoren in Wasser emulgiert und unter Verwendung wasserlöslicher Initiatoren polymerisiert werden. Geeignete Verfahren zur Emulsionspolymerisation werden beispielsweise in Comprehensive Polymer Chemistry, 4, 171-218, Elias (5. Auflage), 2, 93ff. Encyclopaedia of Polymer Science and Engineering, 12, 512ff. oder Encyclopaedia of Polymer Science and Technology, 5, 801ff. beschrieben. Weitere geeignete Referenzen sind beispielsweise aus den dem Fachmann bekannten lexikalischen Nachschlagewerken Ullmann's Enzyklopädie der technischen Chemie, Houben-Weyl (E20, 218-268) oder Kirk-Othmer bekannt. Auf die genannten Literaturstellen wird hiermit ausdrücklich Bezug genommen und die Offenbarung der genannten Stellen wird als Bestandteil der Offenbarung des vorliegenden Textes betrachtet.

Während die aus dem Stand der Technik bekannten füllstoffhaltigen Polymerdispersionen in der Regel eine Zugabe des Füllstoffs zu der bereits fertigen Polymerdispersion beinhalten, liegen die Füllstoffpartikel im vorliegenden Fall bereits vor Beginn der Polymerisation der Monomeren in einer Dispersion in Form ihrer Primärpartikel vor.

In einer bevorzugten Ausführungsform der vorliegenden Erfindung wird die Dispersion der Füllstoffpartikel so durchgeführt, daß gegebenenfalls vorliegende Agglomerate von Füllstoffpartikeln wenigstens weitgehend, d. h., zu wenigstens etwa 80 oder 90 Gew.-%, in ihre Primärpartikel aufgetrennt werden. In der Regel wird diese Aufspaltung in die Primärpartikel durch das Vorliegen von Emulgatoren bzw. Dispergatoren wie sie in der Emulsions- bzw. Suspensionspolymerisation eingesetzt werden, begünstigt. Es ist jedoch auch jede andere Form von Zerlegung eventueller Füllstoffpartikel-Agglomerate in die Primärpartikel im Rahmen des erfindungsgemäßen Verfahrens möglich. Hierzu zählt beispielsweise die Zerteilung von Agglomeraten mittels Ultraschall, einem Flotationsverfahren oder elektrokinetischen Vorgängen.

Zur Herstellung der erfindungsgemäß einsetzbaren füllstoffhaltigen Polymerdispersionen wird zunächst einer Dispersion der Füllstoffpartikel in Wasser erzeugt.

Dabei wird beispielsweise zunächst eine wäßrige Lösung eines ionischen Tensids hergestellt, wobei als ionisches Tensid vorzugsweise dasjenige Tensid eingesetzt wird, das im Anschluß auch bei der Emulsionspolymerisation Verwendung findet.

Als Alternative dazu kann beispielsweise zunächst eine wäßrige Lösung eines organischen wasserlöslichen Polymeren mit einem Molekulargewicht von mindestens etwa 600 und einem HLB-Wert von mindestens etwa 15 hergestellt werden.

In einer weiteren alternativen Ausführungsform kann zunächst eine wäßrige Lösung hergestellt werden, die sowohl ein ionisches Tensid als auch ein wasserlösliches Polymeres mit einem Molekulargewicht von mindestens etwa 600 und einem HLB-Wert von mindestens etwa 15 aufweist.

Im Anschluß an die Herstellung der genannten Lösungen wird die Dispersion der Füllstoffpartikel erzeugt. Hierzu werden die Füllstoffpartikel in einer der oben genannten Lösungen dispergiert, wobei die Dispersion solange gerührt wird, bis eine möglichst weitgehende Verteilung gegebenenfalls vorliegender Füllstoffagglomerate erzielt wurde. In Zweifelsfällen, beispielsweise beim Einsatz eines neuen Füllstoffs zu dem noch keine experimentelle Erfahrung vorliegt, läßt sich die Dispersion der Füllstoffpartikel und die Verteilung eventuell vorliegender Agglomerate einfach durch mehrere aufeinanderfolgende Messungen der Größenverteilung während der Dispersion verfolgen. Eine Zerteilung in die Primärpartikel liegt dann vor, wenn sich die Partikelgrößenverteilung in zwei aufeinanderfolgenden Messungen nicht mehr oder nur noch geringfügig ändert. Gegebenenfalls kann die Zerteilung der Agglomerate durch Beeinflussung der Temperatur, der Rührgeschwindigkeit oder den eingesetzten Emulgator oder ein Gemisch aus zwei oder mehr Emulgatoren beeinflußt werden. Die Effekte der vorgeschlagenen Maßnahmen lassen sich auf einfachste Weise durch die Messung der Partikelgrößenverteilung kontrollieren und für den Einzelfall optimieren.

Wenn eine geeignete Dispersion von Füllstoffpartikeln vorliegt, so wird anschließend mit der Emulsionspolymerisation fortgefahren. Hierzu wird beispielsweise ein Polymerisationsinitiator in der Dispersion gelöst, die Dispersion auf eine geeignete Temperatur gebracht und die Polymerisationsreaktion durch Zutropfen von Monomerem in Gang gebracht. Anstelle dieser Vorgehensweise ist jedoch auch jede andere Vorgehensweise geeignet, mit deren Hilfe sich die Emulsionspolymerisation in der Füllstoffpartikeldispersion durchführen läßt.

In einer weiteren Ausführungsform kann auch eine die Monomeren oder das Monomerengemisch und die Füllstoffdispersion enthaltende Voremulsion nach dem oben beschriebenen Verfahren hergestellt werden. Diese Voremulsion, die gegebenenfalls einen Polymerisationsinitiatoren enthält, kann tropfenweise oder portionsweise bei einer für die Polymerisationsreaktion geeigneten Temperatur der Füllstoffdispersion hinzugefügt werden.

Vorzugsweise wird zur Herstellung der füllstoffhaltigen Polymerdispersionen mindestens ein radikalisch polymerisierbares Monomeres unter Verwendung eines Polymerisationsinitiators einer Emulsionspolymerisation in wäßriger Phase unterworfen, wobei die wäßrige Phase Füllstoffpartikel mindestens eines dispergierten Füllstoffs, mindestens ein wasserlösliches organisches Polymeres und mindestens ein ionisches Tensid enthält. Geeignete ionische Tenside sind diejenigen, die bereits im Rahmen des vorliegenden Textes aufgezählt wurden.

Die zur Herstellung der füllstoffhaltigen Polymerdispersionen eingesetzten Füllstoffe weisen im Rahmen einer bevorzugten Ausführungsform der vorliegenden Erfindung eine Partikelgröße (d50) von 0,01 bis 0,5 µm auf. Das zur Herstellung der füllstoffhaltigen Polymerdispersionen eingesetzte wasserlösliche organische Polymere weist vorzugsweise ein Molekulargewicht von mehr als 600. im Rahmen einer besonders bevorzugten Ausführungsform der vorliegenden Erfindung weist das wasserlösliche organische Polymere einen HLB-Wert von mehr als 15 auf.

In einer weiteren bevorzugten Ausführungsform der Erfindung enthält die wäßrige Phase zusätzlich ein nichtionisches Tensid, wobei geeignete nichtionische Tenside bereits im Rahmen des vorliegenden Textes beschrieben wurden.

In einer weiteren Ausführungsform der Erfindung wird im Rahmen des Verfahrens zur Herstellung der füllstoffhaltigen Polymerdispersion ein wasserlöslicher Polymerisationsinitiator verwendet, insbesondere Peroxoverbindungen organischer oder anorganischer Säuren.

Als Polymerisationsinitiatoren geeignet sind wasserlösliche Initiatoren wie tert.-Butylhydroperoxid, Natriumperoxodisulfat, Peroxodischwefelsäure, Cumolhydroperoxid, Wasserstoffperoxid, Natrium- oder Kaliumpercarbonat; Azoverbindungen wie Diazoisobuttersäuredinitril oder Benzoylperoxid. Ebenfalls geeignet sind Redoxinitiatoren, d. h., Systeme die aus Oxidations- und Reduktionsmitteln bestehen. Wasserlösliche Redoxinitiatoren enthalten in vielen Fällen Übergangsmetalle, z. B. Fe/HO (I), es können jedoch auch andere Basiskomponenten enthalten sein, z. B. die Systeme Peroxisulfate/Metabisulfate, Peroxisulfate/Thiosulfate oder Peroxide/Thiosulfate.

Im Rahmen einer bevorzugten Ausführungsform der Erfindung werden als Polymerisationsinitiatoren Natriumpersulfat, Kaliumpersulfat oder Ammoniumpersulfat eingesetzt.

Die Menge an eingesetztem Polymerisationsinitiator liegt im Rahmen der vorliegenden Erfindung in der Regel bei etwa 0,01 bis etwa 0,5 Gew.-%, bezogen auf die gesamte Dispersion. In einer bevorzugten Ausführungsform der Erfindung liegt die gesamte eingesetzte Menge an Polymerisationsinitiator bei etwa 0,03 bis etwa 0,2 Gew.-%, beispielsweise bei etwa 0,05 bis etwa 0,15 Gew.-%.

Die Gesamtmenge des Polymerisationsinitiators kann im Rahmen der vorliegenden Erfindung bereits zu Beginn der Polymerisation in der Dispersion der Füllstoffpartikel vorliegen. In einer bevorzugten Ausführungsform der Erfindung wird der Polymerisationsinitiator jedoch in mindestens zwei Chargen zu unterschiedlichen Zeitpunkten der Polymerisationsreaktion zugegeben. So kann z.B. die Zugabe eines Teils der gesamten Menge des Polymerisationsinitiators vor der Monomerzugabe erfolgen, während die Zugabe der verbleibende Restmenge portionsweise oder kontinuierlich während der Monomerzugabe, oder nach Beendigung der Monomerzugabe erfolgen kann.

Das Verfahren zur Herstellung der füllstoffhaltigen Polymerdispersionen wird in einer bevorzugten Ausführungsform der Erfindung in mindestens drei aufeinanderfolgenden Stufen durchgeführt, wobei in einer ersten Stufe eine Dispersion enthaltend wobei in einer ersten Stufe eine Dispersion enthaltend
a) mindestens ein ionisches Tensid oder einen nichtionisches oder ein Gemisch aus zwei oder mehr davon,
b) mindestens einen anorganischen Füllstoff,
c) mindestens einen Polymerisationsinitiator und
d) mindestens ein wasserlösliches organisches Polymeres hergestellt wird, die Dispersion auf eine Temperatur von 70 bis 90°C gebracht und anschließend in einer zweiten Stufe
e) mindestens ein radikalisch polymerisierbares Monomeres zugegeben und polymerisiert wird und
   die so erhaltene Polymerdispersion in einer dritten Stufe einer Sprühtrocknung unterzogen wird.

In einer weiteren bevorzugten Ausführungsform der Erfindung erfolgt die Zugabe der anorganischen Füllstoffpartikel vor der Zugabe des Polymerisationsinitiators.

In einer weiteren bevorzugten Ausführungsform des erfindungsgemäßen Verfahrens liegt der anorganische Füllstoff vor der Polymerisation im wesentlichen in Form seiner Primärpartikel vor.

Es hat sich im Rahmen der vorliegenden Erfindung als für die Eigenschaften der Dispersionen und der daraus gewonnenen, erfindungsgemäßen Redispersionspulver als vorteilhaft herausgestellt, wenn die Teilchengrößen der Polymerteilchen und der Füllstoffs Teilchen in einem bestimmten Größenverhältnis zueinander stehen. Es ist daher im Rahmen der vorliegenden Erfindung bevorzugt, wenn die Polymerteilchen und die Füllstoffs Teilchen so ausgewählt werden, daß das Verhältnis der Teilchengröße der Füllstoffpartikel zur Teilchengröße der Polymerpartikel 1,1 : 1 bis 20 : 1 beträgt

Die zur Herstellung der füllstoffhaltigen Polymerdispersionen angewandte Polymerisationstemperatur hängt von der Wahl der eingesetzten Monomeren und dem Polymerisationsverfahren ab. Für die im Rahmen der vorliegenden Erfindung eingesetzten Monomeren aus der Gruppe der Acrylate und Vinylacetat beträgt die Polymerisationstemperatur in einer bevorzugten Ausführungsform der Erfindung etwa 80 bis 90 °C.

Die so erhaltenen füllstoffhaltigen Polymerdispersionen werden anschließend, gegebenenfalls nach einer im wesentlichen beliebig langen Lagerzeit, zur Herstellung der erfindungsgemäßen Redispersionspulver einer Sprühtrocknung unterzogen.

Die Sprühtrocknung erfolgt in üblicher, dem Fachmann bekannter Weise in Sprühtürmen, wobei die zu trocknende Dispersion mit Hilfe von Zerstäubungsscheiben oder Einstoff- oder Mehrstoffdüsen in den Trocknungsturm eingesprüht werden kann. Die Trocknung der Dispersion wird mit heißem Gasen, beispielsweise mit Luft, Stickstoff, Kohlendioxid oder Edelgasen durchgeführt. Dabei kann die Temperatur des Trocknungsgases beispielsweise etwa 90 bis etwa 180 °C oder etwa 130 bis etwa 170 °C betragen.

Im Rahmen einer bevorzugten Ausführungsform der vorliegenden Erfindung wird die Sprühtrocknung mit einer Zerstäubungsscheibe einer Ein- oder Zweistoffdüse durchgeführt, wobei im Falle der Verwendung einer Zweistoffdüse durch die zweite Düse vorzugsweise ein gegebenenfalls erwärmter Gasstrom eingespeist wird. Im Rahmen einer weiteren bevorzugten Ausführungsform der vorliegenden Erfindung wird als heißes Gas Luft eingesetzt. Die Trocknung wird vorzugsweise im Gleichstromverfahren durchgeführt. Vorzugsweise wird der Trocknungsprozeß derart durchgeführt, daß die Pulvertemperatur etwa 60 °C oder weniger beträgt.

Die so erhaltenen, erfindungsgemäßen Redispersionspulver zeichnen sich durch ein ausgezeichnetes Blockverhalten, geringe Staubneigung, geringen Abrieb schnelle Benetzung und ausgezeichnetes Dispersionsverhalten aus. Die aus einem erfindungsgemäßen Redispersionspulver hergestellten wäßrigen Dispersionen weisen im wesentlichen die Eigenschaften der ursprünglich zur Sprühtrocknung eingesetzten Dispersion auf, sofern identische Konzentrationsverhältnisse eingehalten werden.

Die erfindungsgemäßen Redispersionspulver lassen sich in einer Vielzahl von festen, rieselfähigen Zusammensetzungen einsetzen, die vom Anwender mit Wasser zu einer Anwendungszusammensetzung vermischt werden.

In einer ersten Ausführungsform der vorliegenden Erfindung werden die erfindungsgemäßen Redispersionspulver nur mit Wasser vermischt und nach der Dispergierung als Klebemittel oder Oberflächenbeschichtungsmittel, beispielsweise als Holzleim, eingesetzt.

Gegenstand der vorliegenden Erfindung ist daher auch eine wäßrige Bindemittelzubereitung, die Wasser und mindestens ein erfindungsgemäßes Redispersionspulver oder ein nach einem erfindungsgemäßen Verfahren hergestelltes Redispersionspulver enthält.

Im Vordergrund steht im Rahmen der vorliegenden Erfindung die Anwendung der erfindungsgemäßen Redispersionspulver in Klebstoffen, insbesondere in Kleistern zur Verklebung von Wand-, Decken- oder Bodenbelägen. Die erfindungsgemäßen Redispersionspulver zu den dabei eine Verstärkung der Klebekraft, wie sie mit aus dem Stand der Technik bekannten Redispersionspulvern nicht erreicht wird.

Gegenstand der vorliegenden Erfindung ist daher auch eine Bindemittelzusammensetzung, mindestens enthaltend ein erfindungsgemäßes Redispersionspulver und ein organisches oder anorganisches Bindemittel.

Die erfindungsgemäßen Bindemittelzusammensetzungen enthalten Stoffe, die sich zur Herstellung von wäßrigen Bindemittelsystemen eigenen. Unter einem wäßrigen Bindemittelsystem sind Dispersionen zu verstehen, die zum Kleben, Dichten, Verfestigen, Bauen, Modellieren oder allgemein zur Oberflächenbehandlung geeignet sind. Konkrete Beispiele für derartige Lösungen oder Dispersionen sind Kleister, Dispersionsklebstoffe, Additive in Dispersionsklebstoffen, Fugendichtmassen, Holzklebstoffen und Montageklebstoffen, Grundierungen für mineralische Untergründe, Mörtel, Zement und dergleichen.

Die erfindungsgemäßen Bindemittelzusammensetzungen müssen zum Erhalt eines gebrauchsfertigen Produkts, beispielsweise eine Kleisters, eines Dispersionsklebstoffs, eines Dichtmittels oder einer Grundierung für mineralische Untergründe, vom Anwender zunächst mit einer geeigneten Menge Wasser vermischt, das heißt, darin aufgelöst oder darin dispergiert werden.

Mindestens etwa 80 Gew.-% der in den erfindungsgemäßen Bindemittelzusammensetzungen vorliegenden Teilchen weisen im Rahmen der vorliegenden Erfindung vorzugsweise eine Größe von mindestens etwa 0,01 µm und höchstens etwa 1 mm auf. Im Rahmen einer bevorzugten Ausführungsform der vorliegenden Erfindung weisen die Bindemittelteilchen eine Teilchengröße von etwa 0,05 µm bis etwa 0,95mm oder etwa 0,1 µm bis etwa 0,8 mm auf. Vorzugsweise beträgt der Anteil mindestens etwa 90 Gew.-% oder mehr, beispielsweise mindestens etwa 95, 96, 97, 98 oder 99 Gew.-%.

Wenn die erfindungsgemäßen Bindemittelzusammensetzungen ein anorganisches Bindemittel enthalten, so handelt es sich dabei vorzugsweise um anorganische Bindemittel, die mit Wasser " abbinden " (hydraulische Bindemittel). Zu den hydraulischen Bindemitteln zählen beispielsweise die Oxide oder Silikate der Alkali- oder Erdalkalimetalle wie Magnesiumoxid, Bariumoxid, Calciumoxid, Natriumoxid, Lithiumoxid oder Kaliumoxid, insbesondere die als Wasserglas bezeichneten Silikate der Alkalimetalle. Ebenfalls geeignete anorganische Bindemittel sind Zemente die in unterschiedlicher Zusammensetzung Calciumsilikate, Calciumaluminate und Calciumferrite enthalten. Geeignete Zementtypen sind beispielsweise Hochofenzement, Traßzement, Portland-Ölschieferzement, Flugaschezement, Phonolithzement, Vulkanzement, Sulfathüttenzement, Tonerdezement, Quellzement oder Schnellzement. Ebenfalls als anorganisches Bindemittel geeignet sind die verschiedenen Gipstypen.

Die erfindungsgemäßen teilchenförmigen Bindemittelzusammensetzungen enthalten im Rahmen einer bevorzugten Ausführungsform mindestens ein organisches Bindemittel. Als organisches Bindemittel eignen sich insbesondere wasserlösliche Polymere, beispielsweise die natürlichen oder synthetischen Polysaccharide. Im Rahmen einer bevorzugten Ausführungsform der vorliegenden Erfindung enthält daher ein erfindungsgemäßes Bindemittel mindestens ein natürliches oder synthetisches Polysaccharid. Als natürliche oder synthetische Polysaccharide eignen sich beispielsweise Stärke oder Cellulose sowie deren durch geeignete Verfahren erhältliche, an einer oder mehreren OH-Gruppen substituierte Derivate.

Als Stärke oder als Basis der Stärkederivate eignen sich sämtliche Stärketypen wie Kartoffelstärke, Maisstärke, Weizenstärke, Reisstärke, Milostärke, Tapiokastärke oder Gemische aus zwei oder mehr der genannten Stärken und dergleichen. Im Rahmen einer bevorzugten Ausführungsform der vorliegenden Erfindung werden Stärke oder Stärkederivate auf Basis von Kartoffel- oder Maisstärke oder deren Gemische eingesetzt.

Die Stärke sollte wasserlöslich, eventuell zumindest wasserquellbar sein. Insbesondere ist im Rahmen der vorliegenden Erfindung modifizierte Stärke geeignet, wobei eine entsprechende Modifikation durch physikalische oder geringe chemische Einwirkung zustande kommt. Konkrete Beispiele für derartige Stärkederivate sind partiell abgebaute Stärke und Quellstärke.

Die Stärkederivate sollten insbesondere wasserlöslich bzw. zumindest wasserquellbar sein. In diesem Zusammenhang sind insbesondere Stärkeester oder Stärkeether geeignet, vor allem carboxylierte oder alkoxylierte Stärken. Als carboxylierte oder alkoxylierte Stärken eignen sich sämtliche entsprechend modifizierte, bereits oben genannte natürliche Stärketypen. Brauchbare Stärkederivate weisen einen Carboxylierungsgrad von etwa 0,1 bis etwa 2,0 oder einen Alkoxylierungsgrad von etwa 0,05 bis etwa 1,5 auf. Geeignete Stärkederivate können auch mit difunktionellen Verbindungen vernetzt sein, wie sie beispielsweise aus der EP-B 0 311 873 (Seite 3, Zeile 49 bis Seite 4, Zeile 5) bekannt sind.

Als Celluloseverbindungen eignen sich neben der natürlichen Cellulose insbesondere die Celluloseether. Geeignet sind beispielsweise Carboxymethylcellulose (CMC), Carboxymethylmethylcellulose (CMMC), Ethylcellulose (EC), Hydroxypropylcellulose (HPC), Hydroxypropylmethylcellulose (HPMC), Hydroxybutylcellulose (HBC), Hydroxybutylmethylcellulose (HBMC), Hydroxyethylcellulose (HEC), Hydroxyethylcarboxymethylcellulose (HECMC), Hydroxyethylethylcellulose (HEEC), Hydroxypropylcellulose (HPC), Hydropropylcarboxymethylcellulose (HPCMC), Hydroxypropylmethylcellulose (HPMC), Hydroxyethylmethylcellulose (HEMC), Methylhydroxyethylcellulose (MHEC), Methylhydroxyethylpropylcellulose (MHEPC), Methylcellulose (MC) und Propylcellulose (PC), wobei Carboxymethylcellulose, Methylcellulose, Methylhydroxyethylcellulose und Methylhydroxypropylcellulose sowie Gemische aus zwei oder mehr davon sowie die Alkalisalze der CMC und die leicht ethoxylierte MC oder Gemische aus zwei oder mehr der genannten Verbindungen.

Die genannten Cellulosederivate können leicht vernetzt sein, damit sie bei einem pH-Wert von über 8 löslich sind und die Lösung in Wasser verzögert wird. Die Vernetzung kann beispielsweise in bekannter Weise durch Glyoxal-Addition erfolgen.

Die erfindungsgemäßen Bindemittelagglomerate können neben den genannten Inhaltsstoffen, nämlich mindestens einem natürlichen oder synthetischen Polysaccharid und mindestens einem erfindungsgemäßen Redispersionspulver noch weitere Zusatzstoffe enthalten.

Geeignete Zusatzstoffe sind beispielsweise Verbindungen, die eine Alkalisierung des durch Auflösen der erfindungsgemäßen wasserlöslichen Zubereitungen herstellbaren Klebstoffs bewirken. Hierzu zählen beispielsweise Ammonium-, Alkali- und/oder Erdalkalimetallhydroxide, die wasserlöslichen, vorzugsweise pulverförmigen Alkalimetallsilikate (Wasserglas), insbesondere Natrium- oder Kaliumwasserglas sowie Ammoniak und Amine oder basische Salze und Neutralsalze, die sich von starken und schwachen Säuren ableiten. Hierzu gehören beispielsweise die Alkalisalze der Kohlensäure oder der Carbonsäuren oder der tertiären Phosphate. Die genannten Verbindungen können alleine oder als Gemisch aus zwei oder mehr davon eingesetzt werden.

Wenn im Rahmen der Auflösung der erfindungsgemäßen wasserlöslichen Zubereitungen eine Alkalisierung erfolgen soll, dann beträgt der Anteil der obengenannten Zusatzstoffe an der gesamten erfindungsgemäßen wasserlöslichen Zubereitung im allgemeinen etwa 0,1 bis etwa 2 Gew.-%.

Weiterhin als Zusatzstoffe geeignet sind Hilfs- oder Füllstoffe, Netz- und Konservierungsmittel, Konsistenzbildner und Zusatzkomponenten mit Klebkraft wie Dextrine oder ionogene Celluloseether.

Im Rahmen einer weiteren Ausführungsform der vorliegenden Erfindung enthält die wasserlöslichen Zubereitung Hilfs- oder Füllstoffe. Geeignete Hilfs- oder Füllstoffe sind beispielsweise Carbonate (insbesondere Calciumcarbonat), Silikate (beispielsweise Talk, Ton, Glimmer), Kieselerde, Sulfate wie Calcium- oder Bariumsulfat, Aluminiumhydroxid sowie Glasfasern oder Glaskugeln. Derartige Hilfs- oder Füllstoffe können in der erfindungsgemäßen wasserlöslichen Zusammensetzung beispielsweise in einer Menge von bis zu etwa 30, vorzugsweise von etwa 0,1 bis etwa 20 Gew.-%, bezogen auf die gesamte wasserlöslichen Zubereitung, enthalten sein.

Weiterhin kann ein erfindungsgemäßes Bindemittelagglomerat noch Additive enthalten. Als Additive eignen sich insbesondere wasserlösliche ionische oder nichtionische Polymere aus der Gruppe der Polyvinylpyrrolidone, Vinylpyrrolidon/Vinylester-Copolymere, wasserlösliche amphotere Polymere aus der Gruppe der Alkylacrylamid/Acrylsäure-Copolymere, Alkylacrylamid/Methacrylsäure-Copolymere, Alkylacrylamid/Methyhnethacrylsäure-Copolymere, Alkyl-acrylamid/Acrylsäure/Alkylaminoalkyl(meth)acrylsäure-Copolymere, Alkylacrylamid- /Methacrylsäure/Alkylaminoalkyl(meth)acrylsäure-Copolymere, Alkylacrylamid/Methylmethacrylsäure/Alkylaminoalkyl(meth)acrylsäure-Copolymere, Alkylacrylamid/Alkyhnethacrylat/Alkylaminoethyhnethacrylat/Alkylmethacrylat Copolymere, Copolymere aus ungesättigten Carbonsäuren, kationisch derivatisierten ungesättigten Carbonsäuren, gegebenenfalls weiteren ionischen oder nichtionogenen Monomeren, wasserlösliche zwitterionische Polymere aus der Gruppe der Acrylamidoalkyltrialkylammoniumchlorid/Acrylsäure-Copolymere sowie deren Alkali- und Ammoniumsalze, Acrylamidoalkyltrialkylammoniumchlorid/Methacrylsäure-Copolymere sowie deren Alkali- und Ammoniumsalze, Methacroylethylbetain/Methacrylat-Copolymere, wasserlösliche anionische Polymere aus der Gruppe der Vinylacetat/Crotonsäure-Copolymere, Vinylpyrrolidon/Vinylacrylat-Copolymere, Acrylsäure/Ethylacrylat/N-tert.Butylacrylamid-Terpolymere, Pfropfpolymere aus Vinylestern, Estern von Acrylsäure oder Methacrylsäure allein oder im Gemisch, copolymerisiert mit Crotonsäure, Acrylsäure oder Methacrylsäure mit Polyalkylenoxiden und/oder Polyalkylenglycolen, gepfropfte und vernetzte Copolymere aus der Copolymerisation von mindestens einem Monomeren vom nicht-ionischen Typ, mindestens einem Monomeren vom ionischen Typ, von Polyethylenglycol und einem Vernetzer durch Copolymerisation mindestens eines Monomeren jeder der drei folgenden Gruppen erhaltenen Copolymere, Ester ungesättigter Alkohole und kurzkettiger gesättigter Carbonsäuren und/oder Ester kurzkettiger gesättigter Alkohole und ungesättigter Carbonsäuren, ungesättigte Carbonsäuren, Ester langkettiger Carbonsäuren und ungesättigter Alkohole und/oder Ester aus den Carbonsäuren der Gruppe mit gesättigten oder ungesättigten, geradkettigen oder verzweigten C₈₋₁₈-Alkoholen, Terpolymere aus Crotonsäure, Vinylacetat und einem Allyl- oder Methallylester, Tetra- und Pentapolymere aus Crotonsäure oder Allyloxyessigsäure, Vinylacetat oder Vinylpropionat, verzweigten Allyl- oder Methallylestern, Vinylethern, Vinylestern oder geradkettigen Allyl- oder Methallylestern, Crotonsäure-Copolymere mit einem oder mehreren Monomeren aus der Gruppe Ethylen, Vinylbenzol, Vinylmethylether, Acrylamid und deren wasserlöslicher Salze, Terpolymere aus Vinylacetat, Crotonsäure und Vinylestern einer gesättigten aliphatischen in α-, β- oder γ-Stellung verzweigten Monocarbonsäure, wasserlöslichen kationische Polymeren aus der Gruppe der quaternierten Cellulose-Derivate, Polysiloxane mit quaternären Gruppen, kationischen Guar-Derivate, polymeren Dimethyldiallylammoniumsalze und deren Copolymere mit Estern und Amiden von Acrylsäure und Methacrylsäure, Copolymere des Vinylpyrrolidons mit quaternierten Derivaten des Dialkylaminoacrylats und -methacrylats, Vinylpyrrolidon-Methoimidazoliniumchlorid-Copolymere, quaternierter Polyvinylalkohol, unter den INCI-Bezeichnungen Polyquaternium 2, Polyquaternium 17, Polyquaternium 18 und Polyquaternium 27 angegebenen Polymere.

Besonders als Additive geeignet sind wasserlösliche Polymere, wie sie durch Pfropfcopolymerisation erhältlich sind. Als Pfropfgrundlage eignen sich beispielsweise Polyalkylenglykole, insbesondere Polyethylenglykol, mit einem Molekulargewicht von etwa 100 bis etwa 50.000, insbesondere etwa 1000 bis etwa 10.000. zur Herstellung der Pfropfäste können grundsätzlich alle auf Polyalkylenglykole pfropfbaren Verbindungen mit mindestens einer olefinisch ungesättigten Doppelbindung eingesetzt werden. Vorzugsweise werden zur Herstellung der Pfropfäste jedoch Ester des Vinylalkohols mit linearen oder verzweigten, gesättigten Monocarbonsäuren mit 2 bis 24 C-Atomen, insbesondere 2 bis etwa 18 C-Atomen, eingesetzt. Derartige Vinylester wurden im Rahmen des vorliegenden Textes bereits oben beschrieben. Beispielsweise können Pfropfcopolymere eingesetzt werden, die einen Gehalt an Pfropfgrundlage von etwa 10 bis etwa 90 Gew.-% und einen Gehalt an Pfropfästen von etwa 90 bis etwa 10 Gew.-% aufweisen. Das Verhältnis von Pfropfgrundlage zu Pfropfästen wird vorzugsweise so gewählt, daß die Pfropfcopolymeren wasserlöslich sind, wobei die Wasserlöslichkeit bei 20 °C mindestens etwa 1 g/l, vorzugsweise jedoch mehr, beispielsweise etwa 2, 5 oder 10 g/l, betragen sollte.

Im Rahmen einer bevorzugten Ausführungsform der vorliegenden Erfindung wird als Additiv ein Pfropfcopolymeres eingesetzt, das etwa 40 Gew.-% eines Polyethylenglykols (PEG) mit einem Molekulargewicht (M_{w}) von etwa 6000 als Pfropfgrundlage und etwa 60 Gew.-% Polyvinylacetat als Pfropfäste trägt.

Die genannten Additive können in einer Menge von etwa 1 bis etwa 10 Gew.-%, beispielsweise etwa 3 bis etwa 7 Gew.-% in den erfindungsgemäßen Bindemittelzusammensetzungen vorliegen.

Die vorliegende Erfindung betrifft weiterhin eine wäßrige Dispersion einer erfindungsgemäßen Bindemittelzusammensetzung oder einer erfindungsgemäß hergestellten Bindemittelzusammensetzung.

Die erfindungsgemäßen teilchenförmigen Bindemittelzusammensetzungen weisen einen Anteil an Teilchen mit einem Teilchendurchmesser von weniger als 30 µm oder weniger als etwa 35 µm oder weniger als etwa 40 µm auf, der weniger als 1 Gew.-% beträgt. Im Rahmen einer bevorzugten Ausführungsform beträgt der Anteil derartiger Teilchen weniger als 0,8 Gew.-%, beispielsweise weniger als 0,5 Gew.-%.

Die erfindungsgemäßen Bindemittelzusammensetzungen zeigen ein ausgezeichnetes Lagerungsverhalten. Selbst eine Lagerung der erfindungsgemäßen Bindemittelzusammensetzungen, verpackt in Polyethylenbeutel, bei einer Temperatur von mehr als 35 °C und einer Belastung von etwa 1 kg/50 cm² über einen Zeitraum von 24 Stunden führt nicht zu einem Verbacken der erfindungsgemäßen Pulver.

Die erfindungsgemäßen Bindemittelzusammensetzungen weisen eine äußerst geringe Staubneigung auf.

Die erfindungsgemäßen Bindemittelzusammensetzungen enthalten im Rahmen einer bevorzugten Ausführungsform etwa 30 bis etwa 75 Gew.-% eines natürlichen oder synthetischen Polysaccharids oder Polysaccharidderivats, etwa 20 bis etwa 40 Gew.-% eines erfindungsgemäßen Redispersionspulvers, etwa 0 bis etwa 20 Gew.-% Füllstoffe und etwa 0 bis etwa 10 Gew.-% Additive.

Im Rahmen einer weiteren bevorzugten Ausführungsform erhält eine erfindungsgemäße Bindemittelzusammensetzung etwa 40 bis etwa 60 Gew.-% eines natürlichen oder synthetischen Polysaccharids oder Polysaccharidderivats, insbesondere Methylhydroxyethylcellulose, etwa 25 bis etwa 35 Gew.-% eines erfindungsgemäßen Redispersionspulvers, insbesondere Polyvinylacetat oder Poly(vinylalkohol-co-vinylacetat), etwa 5 bis etwa 20 Gew.-% Hilfsstoffe, beispielsweise Calciumcarbonat und etwa 2 bis etwa 7 Gew.-% Additive.

Die Erfindung wird nachfolgend durch Beispiele näher erläutert:

### Beispiele:

### Beispiel 1 (Dispersion A):

### Herstellung einer füllstoffhaltigen Polyvinylacetatdispersion:

1.1 In einen Monomerbehälter wurden 322,8 Gramm Vinylacetatmonomer gefüllt.
1.2 Herstellung der Katalysatorlösung
   In einem sauberem Plastikbehälter wurden 0,5 Gramm Ammoniumpersulfat in 45 Gramm Wasser aufgelöst.
1.3 Herstellung einer Vorlösung
   In einem sauberen Behälter wurden 274 Gramm Wasser, 17 Gramm Mowiol 56/98 (Hersteller: Clariant) und 20 Gramm Polyvinylalkohol-1788 (Hersteller: Sichuan Vinylon Works, China) gefüllt. Die Mischung wurde gerührt und anschließend auf 85 bis 90 °C erhitzt. Es wurde bis zur vollständigen Auflösung der Komponenten etwa 2 Stunden gerührt wobei nochmals 10 Gramm Wasser zugegeben wurden. Anschließend wurde abgekühlt.
1.4 Herstellung der Kreidedispersion
   In einem weiteren sauberen Behälter werden 110 Gramm Wasser, 0,5 Gramm Disponil-A 3065 (Hersteller: Cognis Deutschland GmbH) und 0,25 Gramm Foamaster-306 gemischt. Die Mischung wurde einige Minuten homogenisiert und anschließend mit 200 Gramm Kreide versetzt. Hierbei wurde etwa 30 Minuten lang gerührt, um die Spaltung der Kreide in ihre Primärpartikel zu erreichen.
1.5 Vorlösung und Kreidedispersion werden in den Reaktor gefüllt und homogenisiert.
1.6 Polymerisation
   Die Vormischung wurde auf 80°C aufgeheizt und die Katalysatorlösung zugegeben. Das Gemisch wurde für 5 Minuten durch Rühren homogenisiert.
1.7 Anschließend wurde das Vinylacetatmonomere zugegeben und mit dem Polymerisationsverfahren begonnen. Nach 3,5 bis 4,0 Stunden wurden die physikalisch-chemischen Parameter untersucht.

### Beispiel 2 (Dispersion B + Kreide):

### a) Herstellung der Dispersion B

### Herstellung einer Polyvinylacetatdispersion mit nachträglicher Zugabe von Kreide

2.1 In einen Monomerbehälter wurden 401,8 Gramm Vinylacetatmonomer gefüllt.
2.2 Herstellung der Katalysatorlösung
In einem sauberem Plastikbehälter wurden 0,6 Gramm Kaliumpersulfat in 57 Gramm Wasser aufgelöst.
2.3 Herstellung einer Vorlösung
In einem Reaktor werden 493 Gramm Wasser, 21 Gramm Mowiol 56/58, 26,35 Gramm Polyvinylalkohol-1788 und 0,25 Gramm Foamaster-8034 gefüllt und homogenisiert.
2.4 Polymerisation
Die Vorlösung wurde auf 80°C aufgeheizt und mit der Katalysatorlösung versetzt. Nach Homogenisierung wurde das Vinylacetatmonomere kontinuierlich zugegeben und mit dem Polymerisationsverfahren begonnen. Nach 3,5 bis 4,0 Stunden wurden die physikalischen Eigenschaften der Dispersion untersucht. Die Zusammensetzung der Dispersion B ist in folgender Tabelle wiedergegeben:

| | | Dispersion B |
|---|---|---|
| Nr. | | % |
| 1 | Wasser | 55 |
| 2 | Mowiol 56/98 | 2,1 |
| 3 | Polyvinyl-alkohol-1788 | 2,635 |
| 4 | Foamaster-306 | 0,025 |
| 5 | Monomer (Vinylacetat) | 40,18 |
| 6 | Kaliumpersulfat | 0,06 |

### b) Herstellung der Dispersion B + Kreide

2.5 Zugabe des Füllstoffes (Kreide) zur Dispersion B
100 Gramm der Dispersion B werden mit 25,6 Gramm Kreide versetzt und homogenisiert. Eine vergleichende Gegenüberstellung der Zusammensetzung der beiden Kreidehaltigen Dispersionen ist unten angegeben:

| | | Dispersion A | Dispersion B + Kreide |
|---|---|---|---|
| Nr. | | % | % |
| 1 | Wasser | 43,9 | 43,8 |
| 2 | Mowiol 56/98 | 1,7 | 1,67 |
| 3 | Polyvinyl-alkohol-1788 | 2,0 | 2,1 |
| 4 | Disponil-A 3065 | 0,05 | / |
| 5 | Foamaster-306 | 0,025 | 0,02 |
| 6 | Monomer (Vinylacetat) | 32,28 | 32 |
| 7 | Ammoniumpersulfat | 0,05 | / |
| 8 | Kaliumpersulfat | / | 0,05 |
| 9 | Kreide | 20,0 | 20,36 |

Daraus ergeben sich folgende Festkörper-, Polymer- und Kreidegehalte:

| | Dispersion A | Dispersion B + Kreide |
|---|---|---|
| Festkörpergehalt | 56,1 | 56,2 |
| Polymergehalt | 36,1 | 35,8 |
| Kreidegehalt | 20,0 | 20,4 |
| Kreidegehalt bezogen auf Polymer | 35,7 | 36,3 |

| | | Dispersion B |
|---|---|---|
| Nr. | | % |
| 1 | Wasser | 55 |
| 2 | Mowiol 56/98 | 2,1 |
| 3 | Polyvinyl-alkohol-1788 | 2,635 |
| 4 | Foamaster-306 | 0,025 |
| 5 | Monomer (Vinylacetat) | 40,18 |
| 6 | Kaliumpersulfat | 0,06 |

### Sprühtrocknung:

Beide Polymerdispersionen (Dispersion A und Dispersion B + Kreide) wurden Sprühgetrocknet. Die Dispersionen wurden vor der Trocknung 1:1 mit Wasser verdünnt.

### Sprühparameter:

Gerät: Niro A/S Mobile Minor "2000" Typ D
Düse (Zweistoffdüse): Gleichstrom
Eingangstemperatur: 130°C
Ausgangstemperatur: 60°C
Durchsatz: 3,5-4,5 kg/h
Restfeuchte: Dispersion A: 1,5 %
Dispersion B + Kreide: 1,6 %

Beide Redispersionspulver sind reinweiß, puderig. Dispersion B + Kreide zeigt Verbackungen.

### Ergebnisse der vergleichenden Untersuchungen

Zur Untersuchung der Eigenschaften von redispergierten Redispersionspulvern wurden von den o.g. Pulvern 50 Gew.-%ige Dispersionen in Wasser angefertigt.

| | Pulver aus Dispersion A | Pulver aus Dispersion B + Kreide |
|---|---|---|
| Redispergierbarkeit (Dissolver, 2000UpM) | 2,5 (wenig Klumpen) | 4 (viele Klumpen) |
| Koagulat (visuell) | Wenig | viel |
| Glasaufstrich (50%ige wäßrige Dispersion) | Film: homogen | Film: inhomogen |
| | Abbindung: schnell | Abbindung: langsam |
| Reemulgierung /Wasserbeständigkeit (Wassertropfentest) | sehr gering / wasserfest | sehr stark / wenig wasserfest |
| Abbindezeit (Papier/Papier) | 10 s | 10 s |
| Festkörper | 49,5 % | 49,8 % |

Optische Bewertung der Redispergierbarkeit:
1: keine Klumpen
2: wenig erkennbare Klumpen
3: erkennbare Klumpen
4: sehr viele Klumpen
5: nicht redispergierbar

### Reißwerte

Für die Verklebung von Buchensperrholz (Klebefläche 25 mm x 20 mm) wurden 50%ige Dispersionen hergestellt. Reißwerte nach 3 Tagen (Labor, Holz/Holz) :

| | Zugscherfestigkeiten (N/mm²) | |
|---|---|---|
| | Dispersion A | Dispersion B+Kreide |
| Mittelwert: | 7,1 | 6,4 |
| | | |
| Bruchbild | 20 - 80% Holzbruch | 0-30% Holzbruch |

## Patentansprüche

1. Redispersionspulver, erhältlich durch Sprühtrocknung einer wässrigen Polymerdispersion, die anorganische Füllstoffpartikel und Partikel wenigstens eines synthetischen organischen Polymeren (Polymerpartikel) enthält, wobei das synthetische organische Polymere in Gegenwart der anorganischen Füllstoffpartikel polymerisiert wurde,
wobei als anorganischer Füllstoff Kreide (CaCO3), Gips (CaSO4) als Anhydrit, Halbhydrat oder Dihydrat, Quarzmehl, Kieselgel, Titandioxid, Talk, Schichtsilikat, Bariumsulfat oder Barit enthalten ist,
und wobei als organische Polymere solche einsetzbar sind, die durch radikalische Polymerisation olefinisch ungesättigter Monomere erhältlich sind.

2. Redispersionspulver nach Anspruch 1, **dadurch gekennzeichnet, dass** die Polymerpartikel in der Polymerdispersion vor der Sprühtrocknung einen Durchmesser (d50) von 0,03 bis 0,5 µm aufweisen.

3. Redispersionspulver nach einem der Ansprüche 1 oder 2, **dadurch gekennzeichnet, dass** mindestens ein wasserlösliches organisches Polymeres mit einem Molekulargewicht von mehr als 600 und einem HLB-Wert von mindestens 15 enthalten ist.

4. Redispersionspulver nach einem der Ansprüche 1 bis 3, **dadurch gekennzeichnet, dass** mindestens ein ionisches Tensid mit einem HLB-Wert von 1 bis 10 enthalten ist.

5. Redispersionspulver nach einem der Ansprüche 1 bis 4, **dadurch gekennzeichnet, dass** mindestens ein nichtionisches Tensid mit einem HLB-Wert von 13 bis 20 enthalten ist.

6. Redispersionspulver nach einem der Ansprüche 1 bis 5, **dadurch gekennzeichnet, dass** es
- 10 bis 90 Gew.-% eines organischen Polymeren in Form von Polymerpartikeln,
- 5 bis etwa 70 Gew.-% Füllstoffpartikel,
- 0,1 bis etwa 2 Gew.-% eines nichtionischen Tensids mit einem HLB-Wert von 13 bis 20,
- 0,01 bis etwa 1 Gew.-% eines ionischen Tensids mit einem HLB-Wert von 1 bis 10,
- 0,05 bis etwa 20 Gew.-% eines wasserlöslichen organischen Polymeren mit einem Molekulargewicht von mehr als 600 und einem HLB-Wert von mehr als 15, und
- 0 bis etwa 30 Gew.-% weitere Zusatzstoffe
enthält.

7. Verfahren zur Herstellung eines Redispersionspulvers, **dadurch gekennzeichnet, dass** mindestens ein radikalisch polymerisierbares Monomeres unter Verwendung eines Polymerisationsinitiators einer Emulsionspolymerisation in wässriger Phase unterworfen wird, wobei die wässrige Phase Füllstoffpartikel mindestens eines dispergierten Füllstoffs, enthält und die so erhaltene wässrige Polymerdispersion einer Sprühtrocknung unterzogen wird.

8. Verfahren nach Anspruch 7, **dadurch gekennzeichnet, dass** die wässrige Phase mindestens ein wasserlösliches organisches Polymeres mit einem Molekulargewicht von mehr als 600 und einem HLB-Wert von mehr als 15 enthält.

9. Verfahren nach Anspruch 7 oder 8, **dadurch gekennzeichnet, dass** die wässrige Phase ein nichtionisches Tensid enthält.

10. Verfahren nach einem der Ansprüche 7 bis 9, **dadurch gekennzeichnet, dass** ein wasserlöslicher Polymerisationsinitiator verwendet wird.

11. Verfahren nach einem der Ansprüche 7 bis 10, **dadurch gekennzeichnet, dass** es in mindestens drei aufeinander folgenden Stufen durchgeführt wird, wobei in einer ersten Stufe eine Dispersion enthaltend
a) mindestens ein ionisches Tensid oder einen nichtionisches oder ein Gemisch aus zwei oder mehr davon,
b) mindestens einen anorganischen Füllstoff,
c) mindestens einen Polymerisationsinitiator und
d) mindestens ein wasserlösliches organisches Polymeres hergestellt wird, die Dispersion auf eine Temperatur von 70 bis 90°C gebracht und anschließend in einer zweiten Stufe
e) mindestens ein radikalisch polymerisierbares Monomeres zugegeben und polymerisiert wird und
die so erhaltene Polymerdispersion in einer dritten Stufe einer Sprühtrocknung unterzogen wird.

12. Verfahren nach einem der Ansprüche 7 bis 11, **dadurch gekennzeichnet, dass** die Zugabe der anorganischen Füllstoffpartikel vor der Zugabe des Polymerisationsinitiators erfolgt.

13. Verfahren nach einem der Ansprüche 7 bis 12, **dadurch gekennzeichnet, dass** die in der wässrigen Phase dispergierten Füllstoffpartikel mit einem oder mehreren Monomeren zu einer Voremulsion voremulgiert werden.

14. Verfahren nach Anspruch 13, **dadurch gekennzeichnet, dass** der Voremulsion Polymerisationsinitiatoren portionsweise zugegeben werden.

15. Bindemittelzusammensetzung, **dadurch gekennzeichnet, dass** sie mindestens ein Redispersionspulver nach einem der Ansprüche 1 bis 6, oder ein nach einem Verfahren gemäß einem der Ansprüche 7 bis 14 hergestelltes Redispersionspulver und ein anorganisches oder organisches Bindemittel enthält.

16. Wässrige Bindemittelzubereitung, **dadurch gekennzeichnet, dass** sie Wasser und mindestens ein Redispersionspulver nach einem der Ansprüche 1 bis 6, oder ein nach einem Verfahren gemäß einem der Ansprüche 7 bis 14 hergestelltes Redispersionspulver oder eine Bindemittelzusammensetzung nach Anspruch 15 enthält.

## Claims

1. A redispersible powder obtainable by spray drying an aqueous polymer dispersion that contains inorganic filler particles and particles of at least one synthetic organic polymer (polymer particles), wherein the synthetic organic polymer has been polymerized in the presence of the inorganic filler particles,
wherein chalk (CaCO3), gypsum (CaSO4) as an anhydrite, semihydrate or dihydrate, quartz flour, silica gel, titanium dioxide, talc, sheet silicate, barium sulphate or barite is contained as an inorganic filler, and wherein the organic polymers that are usable are those obtainable by radical polymerization of olefinically unsaturated monomers.

2. The redispersible powder according to Claim 1, **characterized in that** the polymer particles in the polymer dispersion have, before spray drying, a diameter (d50) from 0.03 to 0.5 µm.

3. The redispersible powder according to one of Claims 1 or 2, **characterized in that** at least one water-soluble organic polymer having a molecular weight of more than 600 and an HLB value of at least 15 is contained.

4. The redispersible powder according to one of Claims 1 to 3, **characterized in that** at least one ionic surfactant having an HLB value from 1 to 10 is contained.

5. The redispersible powder according to one of Claims 1 to 4, **characterized in that** at least one nonionic surfactant having an HLB value from 13 to 20 is contained.

6. The redispersible powder according to one of Claims 1 to 5, **characterized in that** it contains
- 10 to 90 wt% of an organic polymer in the form of polymer particles,
- 5 to approximately 70 wt% filler particles,
- 0.1 to approximately 2 wt% of a nonionic surfactant having an HLB value from 13 to 20,
- 0.01 to approximately 1 wt% of an ionic surfactant having an HLB value from 1 to 10,
- 0.05 to approximately 20 wt% of a water-soluble organic polymer having a molecular weight of more than 600 and an HLB value of more than 15, and
- 0 to approximately 30 wt% further additives.

7. A method for manufacturing a redispersible powder, **characterized in that** at least one radically polymerizable monomer is subjected to emulsion polymerization in the aqueous phase using a polymerization initiator, wherein the aqueous phase contains filler particles of at least one dispersed filler, and the aqueous polymer dispersion thus obtained is subjected to spray drying.

8. The method according to Claim 7, **characterized in that** the aqueous phase contains at least one water-soluble organic polymer having a molecular weight of more than 600 and an HLB value of more than 15.

9. The method according to Claim 7 or 8, **characterized in that** the aqueous phase contains a nonionic surfactant.

10. The method according to one of Claims 7 to 9, **characterized in that** a water-soluble polymerization initiator is used.

11. The method according to one of Claims 7 to 10, **characterized in that** it is carried out in at least three successive steps, wherein in a first step a dispersion containing
a) at least one ionic surfactant or one nonionic or a mixture or two or more thereof,
b) at least one inorganic filler,
c) at least one polymerization initiator, and
d) at least one water-soluble organic polymer is manufactured, the dispersion is brought to a temperature from 70 to 90°C, and then in a second step
e) at least one radically polymerizable monomer is added and polymerized, and
in a third step the polymer dispersion thus obtained is subjected to spray drying.

12. The method according to one of Claims 7 to 11, **characterized in that** addition of the inorganic filler particles occurs before addition of the polymerization initiator.

13. The method according to one of Claims 7 to 12, **characterized in that** the filler particles dispersed in the aqueous phase are pre-emulsified with one or more monomers to yield a pre-emulsion.

14. The method according to Claim 13, **characterized in that** polymerization initiators are added in portions to the pre-emulsion.

15. A binding agent composition, **characterized in that** it contains at least one redispersible powder according to one of Claims 1 to 6, or a redispersible powder manufactured according to a method as recited in one of Claims 7 to 14, and an inorganic or organic binding agent.

16. An aqueous binding agent preparation, **characterized in that** it contains water and at least one redispersible powder according to one of Claims 1 to 6, or a redispersible powder manufactured according to a method as recited in one of Claims 7 to 14, or a binding agent composition according to Claim 15.

## Revendications

1. Poudre de redispersion que l'on obtient par séchage par pulvérisation d'une dispersion polymère aqueuse, qui contient des particules de matières de charge inorganiques et des particules d'au moins un polymère organique synthétique (particules polymères), dans laquelle le polymère organique synthétique a été polymérisé en présence des particules de matières de charge inorganiques, la poudre contenant, à titre de matière de charge inorganique, de la craie (CaCO₃), du gypse (CaSO₄) sous la forme d'un anhydrite, d'un semihydrate ou d'un dihydrate, de la farine de quartz, du gel de silice, du dioxyde de titane, du talc, du silicate stratifié, du sulfate de baryum ou de la baryte, et dans laquelle on peut mettre en oeuvre, à titre de polymères organiques, ceux que l'on obtient par polymérisation radicalaire de monomères à insaturation oléfinique.

2. Poudre de redispersion selon la revendication 1, **caractérisée en ce que** les particules polymères présentent, dans la dispersion polymère, avant le séchage par pulvérisation, un diamètre (d50) de 0,03 à 0,5 µm.

3. Poudre de redispersion selon l'une quelconque des revendications 1 ou 2, **caractérisée en ce qu'**elle contient au moins un polymère organique soluble dans l'eau dont le poids moléculaire est supérieur à 600 et dont la valeur HLB s'élève à au moins 15.

4. Poudre de redispersion selon l'une quelconque des revendications 1 à 3, **caractérisée en ce qu'**elle contient au moins un agent tensioactif ionique dont la valeur HLB se situe entre 1 et 10.

5. Poudre de redispersion selon l'une quelconque des revendications 1 à 4, **caractérisée en ce qu'**elle contient au moins un agent tensioactif non ionique dont la valeur HLB se situe entre 13 et 20.

6. Poudre de redispersion selon l'une quelconque des revendications 1 à 5, **caractérisée en ce qu'**elle contient :
- de 10 à 90 % en poids d'un polymère organique sous la forme de particules polymères ;
- de 5 à environ 70 % en poids de particules de matières de charge ;
- de 0,1 à environ 2 % en poids d'un agent tensioactif non ionique dont la valeur HLB se situe entre 13 et 20 ;
- de 0,01 à environ 1 % en poids d'un agent tensioactif ionique dont la valeur HLB se situe entre 1 et 10 ;
- de 0,05 à environ 20 % en poids d'un polymère organique soluble dans l'eau dont le poids moléculaire est supérieur à 600 et dont la valeur HLB est supérieure à 15 ; et
- de 0 à environ 30 % en poids d'additifs supplémentaires.

7. Procédé pour la préparation d'une poudre de redispersion, **caractérisé en ce qu'**on soumet au moins un monomère apte à une polymérisation radicalaire en utilisant un initiateur de la polymérisation à une polymérisation en émulsion en phase aqueuse, la phase aqueuse contenant des particules de matières de charge d'au moins une matière de charge à l'état dispersé, et on soumet la dispersion polymère aqueuse ainsi obtenue à un séchage par pulvérisation.

8. Procédé selon la revendication 7, **caractérisé en ce que** la phase aqueuse contient au moins un polymère organique soluble dans l'eau dont le poids moléculaire est supérieur à 600 et dont la valeur HLB est supérieure à 15.

9. Procédé selon la revendication 7 ou 8, **caractérisé en ce que** la phase aqueuse contient un agent tensioactif non ionique.

10. Procédé selon l'une quelconque des revendications 7 à 9, **caractérisé en ce qu'**on utilise un initiateur de la polymérisation soluble dans l'eau.

11. Procédé selon l'une quelconque des revendications 7 à 10, **caractérisé en ce qu'**on le met en oeuvre dans au moins trois étapes qui se succèdent, dans lequel, dans une première étape, on prépare une dispersion contenant :
a) au moins un agent tensioactif ionique ou un agent tensioactif non ionique ou un mélange de deux d'entre eux ou plus ;
b) au moins une matière de charge inorganique ;
c) au moins un initiateur de la polymérisation ; et
d) au moins un polymère organique soluble dans l'eau ;
on porte la dispersion à une température de 70 à 90 °C et ensuite, dans une deuxième étape, on ajoute :
e) au moins un monomère apte à une polymérisation radicalaire, et on polymérise ; et
on soumet la dispersion polymère obtenue, dans une troisième étape, à un séchage par pulvérisation.

12. Procédé selon l'une quelconque des revendications 7 à 11, **caractérisé en ce que** l'addition des particules de matières de charge inorganiques a lieu avant l'addition de l'initiateur de la polymérisation.

13. Procédé selon l'une quelconque des revendications 7 à 12, **caractérisé en ce que** les particules de matière de charge dispersées dans la phase aqueuse font l'objet d'une mise en émulsion préalable avec un ou plusieurs monomères pour obtenir une pré-émulsion.

14. Procédé selon la revendication 13, **caractérisé en ce qu'**on ajoute par portions à la pré-émulsion, des initiateurs de la polymérisation.

15. Composition de liant, **caractérisée en ce qu'**elle contient au moins une poudre de redispersion selon l'une quelconque des revendications 1 à 6 ou une poudre de redispersion préparée conformément à un procédé selon l'une quelconque des revendications 7 à 14 et un liant inorganique ou organique.

16. Préparation aqueuse de liant, **caractérisée en ce qu'**elle contient de l'eau et au moins une poudre de redispersion selon l'une quelconque des revendications 1 à 6 ou une poudre de redispersion préparée conformément à un procédé selon l'une quelconque des revendications 7 à 14 ou une composition de liant selon la revendication 15.
